# EUROPÄISCHE PATENTANMELDUNG

(11) **EP 1 054 246 A2**
(43) Veröffentlichungstag der Anmeldung: **22.11.2000**
(21) Anmeldenummer: 00110447.0
(22) Anmeldetag: 16.05.2000
(51) Int. Cl.: G01M 17/02

(54) **Verfahren und Vorrichtung zum Prüfen von Reifen**

(30) Priorität: 18.05.1999 DE 19922775
(71) Anmelder: Beissbarth GmbH, 80993 München (DE)
(72) Erfinder: Unger-Richels, Sigrun, Dr., 85716 Unterschleissheim (DE); Ros, Simon, 84453 Mühldorf am Inn (DE)
(74) Vertreter: Kirschner, Klaus Dieter, Dipl.-Phys.

(57) **Zusammenfassung**

Bei dem Reifenprüfverfahren und in der Reifenprüfvorrichtung wird vor und nach einer Änderung im Reifendruck mit kohärenter Strahlung jeweils ein Interferogramm der Reifenoberfläche erzeugt. Aus dem Interferogramm werden die Informationen über vorhandene Fehlstellen des Reifens gewonnen und als Kontrastprofil bereitgestellt. Eine Abtasteinrichtung tastet die das Kontrastprofil nach Winkel und Radius auf Kontrastwerte ab, und in einer Speichereinrichtung werden die Kontrastwerte nach Winkel und Radius abgespeichert Eine Statistik-Auswertungseinrichtung wertet die Kontrastwerte statistisch aus und bestimmt die Formen und deren gegenseitige Lagen der Kontrastbereiche zueinander, deren Kontrastwerte über einem vorgegebenen Stellenwert liegen. In eine Entscheidungseinrichtung wird aufgrund der Formen und der gegenseitigen Lagen der Kontrastbereiche eine Zuordnung der Kontrastbereiche zu Fehlstellen oder Stößen durchgeführt.

## Beschreibung

Die Erfindung betrifft ein Reifenprüfverfahren, bei dem vor und nach einer Änderung im Reifendruck mit kohärenter Strahlung jeweils ein Interferogramm der Reifenoberfläche erzeugt und aus dem Interferogramm die Informationen über vorhandene Fehlstellen des Reifens gewonnen und als Kontrastprofil bereitgestellt werden. Die Erfindung betrifft ferner eine Reifenprüfvorrichtung mit einer Luftdruckeinrichtung zur Änderung des Reifendrucks sowie einem Prüfkopf und einem Rechner, die vor und nach einer Änderung im Luftdruck mit kohärenter Strahlung jeweils ein Interferogramm der Reifenoberfläche erzeugen, wobei aus dem Interferogramm die Informationen über vorhandene Fehlstellen des Reifens gewonnen und als Kontrastprofil bereitgestellt werden.

Aus der DE 4231578 A1 ist ein Verfahren zur Ermittlung der Strukturfestigkeit von Reifen bekannt, bei dem der Reifen mit kohärentem Licht beleuchtet wird, die vom Reifen zurückgestreute Strahlung in einem Zweistrahlinterferometer in zwei Teilstrahlen aufgeteilt wird, in dem Zweistrahlinterferometer eine der beiden Teilstrahlungen gegen die andere Teilstrahlung verkippt wird (Shearing), in dem Zweistrahlinterferometer eine der beiden Teilstrahlungen schrittweise phasenverschoben wird, die von dem Prüfobjekt zurückgestreute und in dem Zweistrahlinterferometer in die zwei Teilstrahlungen aufgeteilte und wieder zusammengeführte Strahlung durch die Oberfläche des Reifens abbildende Komponenten mit großer Öffnung einem elektronischen Bildsensorsystem zugeführt wird und die von dem Bildsensorsystem abgegebenen Signale digitalisiert und in einem Bildverarbeitungssystem zu einem Modulo-2π-Bild weiterverarbeitet werden und das Modulo-2π-Bild zu einem Ausgangs-Grauwertbild bestätigt wird.

Gemäß der DE 19502073 A1 wird das oben erwähnte Verfahren dadurch weitergebildet, daß das Ausgangs-Grauwertbild in der Weise partiell differenziert wird, daß ein zweites dem Ausgangs-Grauwertbild gleiches Grauwertbild erzeugt wird und dieses gegen das Ausgangs-Grauwertbild in Shearing-Richtung geometrisch verschoben und um einen über den gesamten Bildbereich konstanten Grauwert verändert wird und das so manipulierte Zweit-Grauwertbild von dem Ausgangs-Grauwertbild subtrahiert wird, und damit ein resultierendes Grauwertbild entsteht, an dem gegebenenfalls vorhandene Fehlstellen eines Reifens erkennbar sind.

Aus der DE 3 624 589 A1 ist ein Verfahren zur zerstörungsfreien Prüfung von Fahrzeugreifen bekannt, bei dem mittels der holographischen Interferometrie oder Shearographie, die auf Verformungen zu untersuchender Reifenoberfläche kurzzeitig mittels eines energiereichen Laserimpulses beleuchtet wird. Die erzielten Interferogramme oder Shearogramme werden zeitsparend mittels einer Thermoplastkamera festgehalten. Das Verfahren wird auf einer Vorrichtung durchgeführt, bei der der zu prüfende Reifen schrittweise entlang einer Reifen-Transportstrecke mit verschiedenen Behandlungsstationen einschließlich einer mit der Impulseinrichtung versehenen Unterdruckbehälter bewegt werden.

Wenn man bedenkt, daß Strukturschäden in den Reifen, insbesondere in der Karkasse einschließlich Gürtel, bei PKW-Reifen die Fahrsicherheit des Kraftfahrzeuges wesentlich beeinträchtigen können, ist es wünschenswert, ein Gerät bereitzustellen, welches eine zuverlässige Reifenprüfung durchführen kann.

Die oben genannten Verfahren haben ferner den Nachteil, daß nicht nur Defekte oder Fehlstellen, die eine Strukturschwächung des Reifens bedeuten, sondern auch sogenannte Stöße erfaßt und angezeigt werden, die eine Strukturverstärkung im Reifen bedeuten. Bei der Auswertung der Prüfergebnisse, die in Form einer Graphik ausgegeben werden, könnte möglicherweise ein erfahrener Bedienungsmann die Fehlstellen von den Stößen unterscheiden. Andererseits wäre es erwünscht, daß diese Entscheidungen nicht auf der Basis der Erfahrung des Bedienungsmanns, sondern korrekt und verbindlich bei der Ausführung des Prüfverfahrens selbst getroffen wird.

Der Erfindung liegt die Aufgabe zugrunde, eine Reifenprüfverfahren und eine Vorrichtung zu schaffen, wodurch eine sichere Unterscheidung zwischen Fehlstellen, die Strukturschwächung bedeuten, und Stößen, die eine Strukturverstärkung bedeuten, getroffen werden kann.

Zur Lösung dieser Aufgabe ist das oben angegebene Verfahren dadurch gekennzeichnet, daß das Kontrastprofil nach Winkel und Radius auf Kontrastwerte abgetastet wird, daß die Kontrastwerte und der Winkel und Radius abgespeichert werden, daß die Kontrastwerte statistisch ausgewertet und die Formen und die gegenseitigen Lagen von Kontrastbereichen zueinander bestimmt werden, deren Kontrastwerte bei einem vorgegebenen Stellenwert liegen, daß aufgrund der Formen und der gegenseitigen Lagen der Kontrastbereiche eine Zuordnung der Kontrastbereiche zu Fehlstellen oder Stößen durchgeführt wird. Als Kontrastbereiche sind solche Bereiche definiert, deren Kontrastwerte sich deutlich von den Kontrastwerten ihrer Umgebung unterscheiden. Wenn beispielsweise zum Zwecke der vorteilhaften Darstellung des Meßergebnisses die Kontraste durch Helligkeit oder Grauwerte oder durch Farben in einer Bildung der Reifenoberfläche gebildet sind, sind die Kontrastbereiche dunkle Flecken auf hellem Grund oder helle Flecken auf dunklem Grund oder farbige Flecken auf neutralem Hintergrund. Aus den Formen und den gegenseitigen Lagen dieser Kontrastbereiche läßt sich nun eine sichere Unterscheidung von Fehlstellen und Stößen durchführen, da Fehlstellen radial ausgerichtet sind und einen Kontrastbereich hervorrufen, zu dem es in seiner Umgebung in dem Bild des Reifens keinen weiteren, radial ausgerichteten Kontrastbereich gibt. Demgebenüber sind Stöße ebenfalls radial ausgerichtet und rufen zwei Kontrastbereiche hervor, die einen vorgegebenen maximalen Abstand haben und zwischen denen ein Bereich minimaler Kontrastbereiche liegt.

Eine vorteilhafte Ausgestaltung des erfindungsgemäßen Verfahrens ist dadurch gekennzeichnet, daß nur die Kontrastwerte, die oberhalb eines zweiten Schwellenwertes liegen, in einer Schwellenwertdatei abgespeichert werden. Durch diesen zweiten Schwellenwert werden im Rauschbereich liegende Kontrastwerte unterdrückt. Eine vorteilhafte Ausgestaltung des erfindungsgemäßen Verfahrens ist dadurch gekennzeichnet, daß die statistische Auswertung über die Häufigkeitsverteilung der Kontrastwerte über dem Radius durchgeführt wird. Damit wird in vorteilhafter Weise dem Kriterium Rechnung getragen, daß sich Fehlstellen radial erstrecken, weil dieses Merkmal durch diese Art der statistischen Auswertung herausgefiltert wird.

Eine weitere vorteilhafte Ausgestaltung des erfindungsgemäßen Verfahrens ist dadurch gekennzeichnet, daß die statistische Auswertung durchgeführt wird über eine Häufigkeitstabelle der Kontrastwerte, bei der jeder Eintrag in der Schwellenwertdatei den Zähler in der entsprechenden Zelle nach Winkel und Radius erhöht, und eine Häufigkeitssummentabelle der Kontrastwerte, in der die Summen der Spalten der Häufigkeitstabelle über dem Winkel gebildet werden. Das Ergebnis dieser Auswertung stellt in vorteilhafter Weise eine zuverlässige Bildkontrastauswertung dar.

Eine weitere vorteilhafte Ausgestaltung des erfindungsgemäßen Verfahren ist dadurch gekennzeichnet, daß die statistische Auswertung über die Kontrastwerteverteilung der Kontrastwerte über dem Radius durchgeführt wird. Dies ist eine alternative Ausführung zu der oben beschriebenen statistischen Auswertung über die Häufigkeitsverteilung.

Eine weitere vorteilhafte Ausgestaltung des erfindungsgemäßen Verfahrens ist dadurch gekennzeichnet, daß die statistische Auswertung durchgeführt wird über eine Kontrastwertetabelle, in der jeder Kontrastwert aus der Schwellenwertdatei in die entsprechende Zelle nach Winkel und Radius addiert wird, und eine Kontrastwert-Summentabelle, in der die Summen der Spalten der Kontrastwerttabelle aus der Schwellenwertdatei über dem Winkel gebildet werden.

Den vorteilhaften Verfahren, bei denen die statistische Auswertung über die Häufigkeitsverteilung der Kontrastwerte oder über die Kontrastwerteverteilung durchgeführt werden, haben den Vorteil, daß solche Kontrastbereiche hervorgehoben werden, die eine große radiale Erstreckung haben.

Eine weitere vorteilhafte Ausgestaltung des erfindungsgemäßen Verfahrens ist dadurch gekennzeichnet, daß eine gewichtete Multiplikation der Häufigkeits-Summentabelle und der Kontrastwerte-Summentabelle durchgeführt wird, um die Unterscheidung von Fehlstellen bzw. Stößen einerseits und Bildstörungen andererseits zu verbessern.

Eine weitere vorteilhafte Ausgestaltung des erfindungsgemäßen Verfahrens ist dadurch gekennzeichnet, daß die Zuordnung der Kontrastbereiche zu Fehlstellen oder Stößen durch Auswertung der Häufigkeitssummen der Kontrastwerte oder der Kontrastwertesummen durchgeführt wird. Diese Zwischenergebnisse sind eine sichere Basis für die Zuordnungsentscheidung.

Eine weitere vorteilhafte Ausgestaltung des erfindungsgemäßen Verfahrens ist dadurch gekennzeichnet, daß nur solche Häufigkeitssummen oder Kontrastwertesummen ausgewertet werden, die einen dritten Schwellenwert übersteigen. Der dritte Schwellenwert dient in vorteilhafter Weise dazu, Bildstörungen auszufiltern, die sich nicht radial und auch nicht über einen ganzen Radius erstrecken.

Eine weitere vorteilhafte Ausgestaltung des erfindungsgemäßen Verfahrens ist dadurch gekennzeichnet, daß der dritte Schwellenwert kleiner als der erste Schwellenwert ist. Grundsätzlich könnte man den ersten und den dritten Schwellenwert auch gleich groß wählen. Die Möglichkeit, diese Schwellenwerte unterschiedlich zu wählen, gibt jedoch noch eine weitere Möglichkeit, das Ergebnis der statistischen Auswertung augenfälliger zu gestalten, in dem die Kontrastbereiche größer werden, wenn der erste Schwellenwert herabgesetzt wird. Ferner kann dadurch berücksichtigt werden, daß das zweite Maximum bei einem Stoß auch einen kleineren Werte als das erste Maximum haben kann.

Eine weitere vorteilhafte Ausgestaltung des erfindungsgemäßen Verfahrens ist dadurch gekennzeichnet, daß die Zuordnung eines Kontrastbereiches zu einer Fehlstelle bzw. einem Stoß dadurch durchgeführt wird, daß ein Fenster vorgegebener Länge über eine durch die Summen gebildete Kurve bewegt und eine Fehlstelle festgestellt wird, wenn jeweils nur ein Maximum in dem Fenster erfaßt wird, und ein Stoß festgestellt wird, wenn zwei Maxima der Kurve in dem Fenster erfaßt werden. Damit läßt sich in einfacher Weise das Kriterium der Unterscheidung von Fehlstellen und Stößen bezüglich der jeweiligen Maxima feststellen.

Die oben genannte Aufgabe wird ferner gelöst durch eine Reifenprüfvorrichtung der oben genannten Art, die gekennzeichnet ist durch:
- eine Abtasteinrichtung, die das Kontrastprofil nach Winkel und Radius auf Kontrastwerte abtastet, durch
- eine Speichereinrichtung, in die die Kontrastwerte nach Winkel und Radius abgespeichert werden, durch
- eine Statistik-Auswertungseinrichtung, durch die die Kontrastwerte statistisch ausgewertet und die Formen und deren gegenseitige Lagen der Kontrastbereiche zueinander bestimmt werden, deren Kontrastwerte über einem vorgegebenen Stellenwert liegen, und durch
- eine Entscheidungseinrichtung, durch die aufgrund der Formen und der gegenseitigen Lagen der Kontrastbereiche eine Zuordnung der Kontrastbereiche zu Fehlstellen oder Stößen durchgeführt wird.

Ausführungsbeispiele der Erfindung werden nun anhand der beiliegenden Zeichnungen beschrieben. Es zeigen:
Figur 1 ein Ablaufdiagramm des erfindungsgemäßen Verfahrens;
Figur 2 eine schematische Darstellung eines Reifens mit einem Bildausschnitt;
Figur 3 eine schematische Darstellung einer Bildmaske mit den Koordinatenradien und Winkeln;
Figur 4 ein Beispiel für eine Häufigkeitstabelle oder eine Wertetabelle;
Figur 5 eine schematische Darstellung eines Bildausschnittes mit Fehlstellen und Bildstörungen;
Figur 6 ein Beispiel für eine Häufigkeitssummen- oder Kontrastwertesummen-Tabelle;
Figuren 7A bis 7C Darstellungen der Ergebnisse in verschiedenen Stufen des erfindungsgemäßen Verfahrens;
Figuren 8A bis 8C Darstellungen der Ergebnisse in verschiedenen Stufen des erfindungsgemäßen Verfahrens;
Figur 9 eine schematische Darstellung der Lage der Fehlstelle und des Stoßes, wie sie nach den Verfahrensschritte von Figur 8 ermittelt wurden; und
Figur 10 ein Blockdiagram der Reifenprüfvorrichtung.

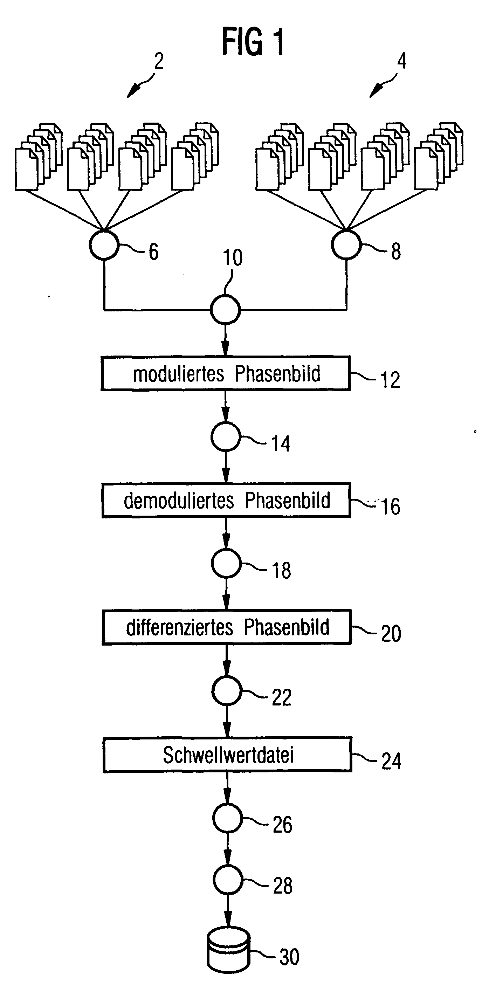

Anhand von Figur 1 wird nun ein kurzer Überblick über die Durchführung des Reifenprüfverfahrens gegeben. Anstelle von Kontrastprofilen, Kontrastwrte und Kontrastbereichen wird im folgenden von Bildern, Helligkeitswerte und Bildflecken gesprochen, um die Beschreibung anschaulicher zu gestalten.

Zunächst erfolgt der Bildeinzug der Quellbilder 2 mit CCD-Elementen. Um eine Bildmittelung durchzuführen, werden eine Vielzahl von Quellbildern 2 aufgenommen, und diese Quellbilder bilden eine erste Bildsequenz. Als nächstes wird ein zweiter Satz von Quellbildern eingezogen, nachdem etwas Luft aus dem zu prüfenden Reifen abgelassen worden ist. Nach Bildmittelung ergibt sich daraus die zweite Bildsequenz. In den Verfahrensschritten 4 und 6 werden die Algorithmen nach dem Phasenshift- und Shearingverfahren durchgeführt, wie sie im Stand der Technik beschrieben sind. Durch Faltung bzw. Abzug der Bilder vor und nach dem Luftablassen im Verfahrensschritt 10 wird ein moduliertes Phasenbild, ein sog. Sägezahnbild, erzeugt, wie bei 12 angedeutet ist.

Sodann wird in dem Verfahrensschritt 14 das modulierte Phasenbild demoduliert, wobei sich nach Anwendung einer an sich bekannten Filtertechnologie ein demoduliertes Phasenbild ergibt, wie in Block 16 dargestellt ist. Nach Differenzieren des Phasenbildes in Shearingrichtung in dem Verfahrensschritt 18 ergibt sich das differenzierte Phasenbild, wie in Block 20 dargestellt ist.

Diese differenzierte Phasenbild wird nun erfindungsgemäß ausgewertet, um zwischen Fehlstellen und Stößen unterscheiden zu können.

Zu diesem Zweck werden die Bildpixel innerhalb einer Maske nach Winkel und Radius gerastet, und alle Pixel werden ausgegeben und gespeichert, die über einem festgelegten ersten Schwellenwert liegen. Auf diese Weise wird die sogenannte Schwellenwertdatei 24 aufgebaut. Im Verfahrensschritt 26 wird die Schwellenwertdatei mit Ziel der Fehlerauswertung ausgewertet, und im Verfahrensschritt 28 wird zwischen Strukturschwächung (Fehlstelle) und Versteifung (Stoß) unterschieden. Sodann wird das Ergebnis angezeigt und die Bilder sowie die Information über die Fehlstellen werden in dem Speicher 30 abgespeichert.

Das erfindungsgemäße Verfahren schließt sich somit an die bisher bekannte Reifenprüfverfahren an und bezieht sich insbesondere auf die Auswertung der Bilddaten zur Erkennung und der Unterscheidung von Fehlstellen und Stößen.

Kurz gesagt besteht das Verfahren darin, das zunächst ein Bereich der Reifenoberfläche mit kohärentem Licht im Infrarotbereich durch Laserdioden ausleuchtet wird, worauf ein Bildeinzug durch CCD-Elemente oder CCD-Kamera erfolgt. Dabei kommt eine Optik zum Einsatz, die sowohl den Einsatz von Phaseshifting als auch des Shearings ermöglicht. Um den Einfluß von Störungen bzw. Erschütterungen während des Bildeinzugs zu beseitigen, wird bereits beim Bildeinzug eine Bildmittelung mehrerer Quellbilder durchgeführt. Die Bildauswertung erfolgt durch an sich bekanntere Algorithmen, die dazu dienen, die Intensitätsinformation der CCD-Kamera in Phaseninformationen zu wandeln. Schließlich wird mit Hilfe einer Maske der Bildbereich ausgeblendet, der zur Fehlstellenauswertung nicht herangezogen werden soll. Im Anschluß an diese verfahrensschritte wird nun das Bild innerhalb der Maske nach Winkel und Radius abgetastet, und es werden alle Punkte ausgegeben, deren Werte oberhalb eines festgelegten Schwellenwertes liegen. Nach Häufigkeits- und Summenbildung über den Radius folgt eine Fehlstellenerkennung durch Betrachtung der Häufigkeiten und Summen über dem Winkel. Die Unterscheidung zwischen Fehlstelle und Stoß erfolgt durch Untersuchung der Umgebung einer vermeintlichen Fehlstelle.

Im folgenden werden die einzelnen Schritte des erfindungsgemäßen Verfahrens näher erläutert. Die Schwellenwertdatei, die durch Rastern der Maske erstellt wird, enthält die über dem Schwellenwert liegenden Helligkeitswerte mit Winkel und Radius. Da die Schrittweite bei der Rasterung klein gewählt ist, die Angabe von Winkel und Radius jedoch gerundet wird, ist ein mehrfaches Auftreten einer Pixelkoordinate möglich. Ein Beispiel für eine solche Tabelle ist wie folgt:

**Tabelle**

| Winkel (°) | Radius (mm) | Helligkeitswert |
|---|---|---|
| 10 | 198 | 35 |
| 10 | 198 | 40 |
| 10 | 199 | 38 |
| 30 | 203 | 70 |
| 30 | 202 | 69 |

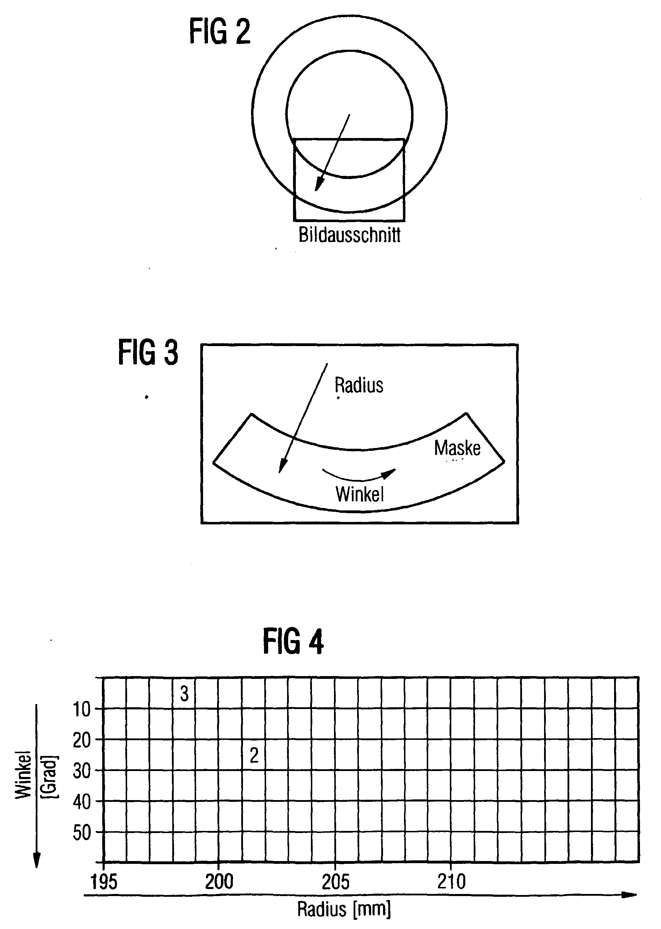

Die Definition der Maske, des Radius und des Winkels ergeben sich aus den Figuren 2 und 3. Die Helligkeitswerte haben einen Bereich von 0 (=schwarz) bis 255 (=weiß) und stellen den Kontrastwert und die Helligkeit eines Punktes mit den vorstehend aufgeführten Koordinaten dar. Zur weiteren Auswertung der Schwellwertdatei in Schritt 26 (Figur 1) werden mehrere Tabellen angelegt, und die Daten aus der Schwellwertdatei in die Tabellen eingelesen. Die Übernahme der Daten mit Winkel und Radius bewirkt eine Abbildung der Polarkoordinaten des Reifens in ein kartesisches Koordinatensystem, wodurch die weitere Auswertung erleichtert wird.

Zunächst werden die Einträge aus der Schwellenwertdatei nach Radius und Winkel als X-Koordinate und als Y-Koordinate in eine Häufigkeitstabelle und eine Wertetabelle abgelegt. Die Häufigkeitstabelle wird dadurch erstellt, daß jeder Eintrag in der Schwellenwertdatei den Zähler in der entsprechenden Zelle nach Winkel und Radius in Abbildung 4 erhöht. So ergibt beispielsweise die Umsetzung der oben angegebenen Tabelle eine Häufigkeitstabelle nach Figur 4, daß in der durch den Winkel von 10° und den Radius von 198 mm definierte Zelle ein Eintrag 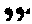 2" und die durch den Winkel von 30° und den Radius von 203 mm definierte Zelle eine 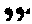 2". Würde die Tabelle in Figur 4 als Wertetabelle angelegt, so würde in der Zelle, die durch einen Winkel von 10° und einem Radius von 198 mm definiert ist, der Wert 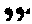 75" eingetragen und in die Zelle, die durch den Winkel von 10° und einen Radius von 199 mm definiert ist, der Wert 38 eingetragen. In der Zelle, die durch den Winkel von 30° und den Radius von 203 mm definiert ist, wird der Wert 70 eingetragen, und in die Zelle, die durch den Winkel von 30° und den Radius von 202 mm definiert ist, der Wert 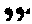 69" eingetragen. Bei der Wertetabelle wird jeder Wert aus der Schwellenwertdatei in die entsprechende Zelle hinzuaddiert. Eine Zelle ist durch den gleichen Wert bei Winkel und Radius definiert.

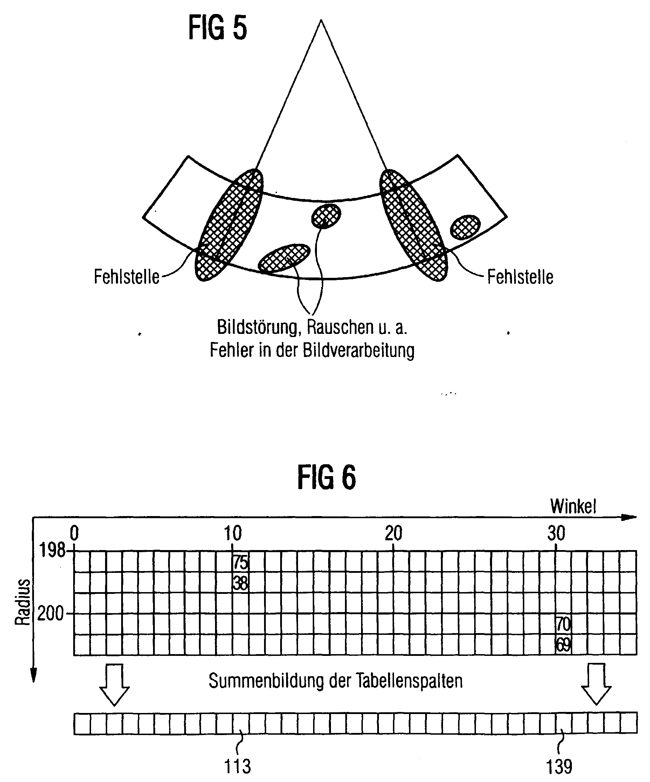

Figur 5 zeigt ein Beispiel für ein Bild mit Fehlstellen und Bildstörungen, die durch Rauschen oder andere Fehler in der Bildverarbeitung erzeugt werden. Ersichtlich erstrecken sich die Fehlstellen über nahezu die gesamte Maskenbreite, und die Fehlstellen sind radial aufgerichtet. Diese beiden Merkmale werden bie bei der nachfolgenden Fehlstellenzufuhr berücksichtigt bzw. ausgewertet. Zur Fehlstellensuche werden die Spaltensummen der Häufigkeitstabelle bzw. der Wertetabelle gebildet. Dabei erhält man Häufigkeitssummen über dem Winkel, d. h. eine Zeile, die die Summen der Spalten aus der Häufigkeitstabelle von Figur 4 enthält. Als Wertesummen über dem Winkel erhält man eine Zeile, die die Summen der Werte der Spalten der Wertetabelle enthalten. In Figur 6 ist das Beispiel der Wertesummentabelle gezeigt, wobei nach Summenbildung der Tabellenspalten in der Ergebniszeile unter dem Winkel von 10° der Wert 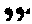 113" und unter dem Winkel von 30° der Wert 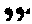 139" erhalten wird. In analoger Weise wird auch bei der Häufigkeitssummentabelle vorgegangen.

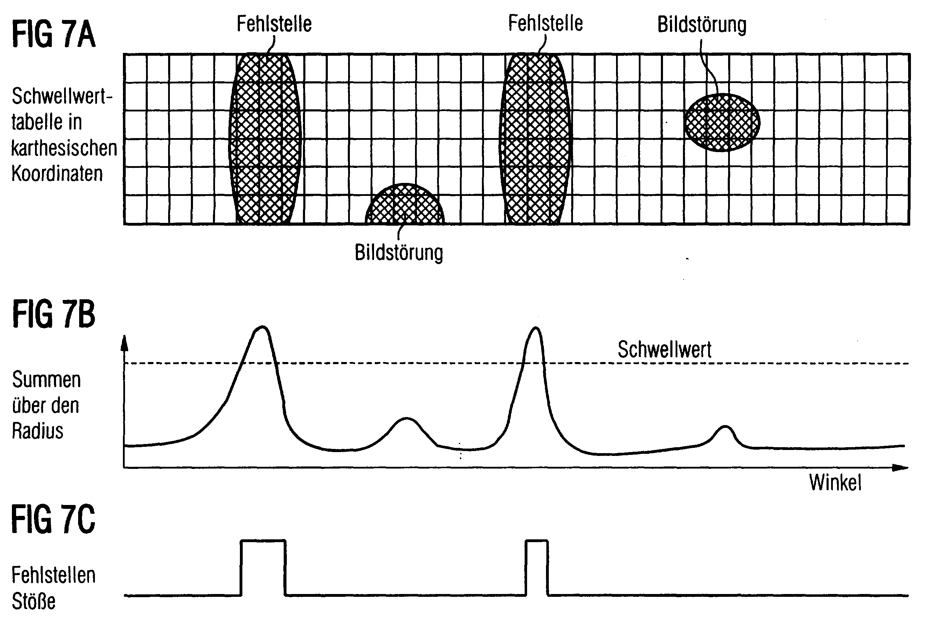

Mit Hilfe gewichteter Multiplikation, d. h. einer Multiplikation oder Faltung der Helligkeitswerte mit den entsprechenden Häufigkeiten, anhand der Summentabellen ist es möglich, Fehlstellen und Stöße deutlich von Bildstörungen zu unterscheiden, wie in den Figuren 7A bis 7C dargestellt ist. Figur 7A zeigt die Schwellenwerttabelle in kartesischen Koordinaten, wobei keine Zahlenwerte sondern Helligkeits- oder Grauwerte eingetragen sind. Figur 7B zeigt eine Kurve, die sich aus der Schwellenwerttabelle von Figur 7A ergibt, indem man die Summen über dem Radius gegen den Winkel aufträgt. Wie aus Figur 7A zu ersehen ist, treten in dieser Maske zwei Kontrastbereiche auf, die zu Fehlstellen gehören und zwei Kontrastbereiche, die zu Bildstörungen gehören. Um die Bildstörungen auszufiltern, wird ein Schwellenwert gesetzt, wie in Figur 7B angedeutet ist, so daß durch entsprechende Pulsformung nur noch die beiden Impulse übrigbleiben, wie in Figur 7C gezeigt ist, und die den Fehlstellen oder Stößen zugeordnet sein können. Der Schwellenwert in Figur 7D kann verhältnismäßig hoch angesetzt werden, um sicher Bildstörungen auszublenden.

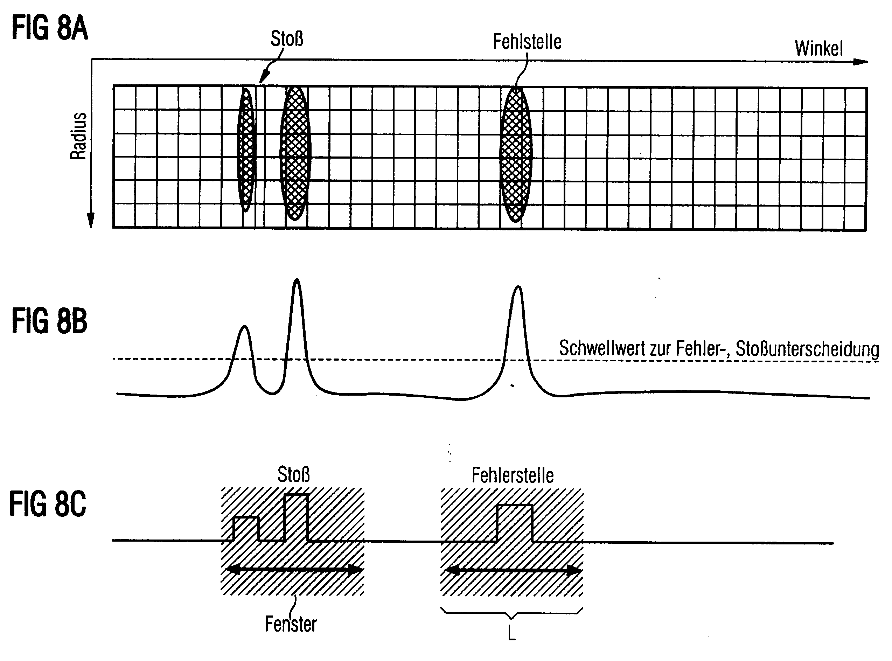

Die Figuren 8A bis 8C verdeutlichen die Unterscheidung von Fehlstellen und Stößen. Da Stöße im Gegensatz zu Fehlstellen kein sicheres Risiko beim Kraftfahrzeugreifen darstellen, ist eine klare Unterscheidung zwischen Fehlstelle und Stoß zu treffen. Dazu werden als charakteristische Merkmale ausgewertet, daß ein Stoß durch zwei Maxima zu erkennen ist, die an einem Minimum gespiegelt auftreten. Der maximale Abstand zwischen den Maxima kann voreingestellt werden. Eine Fehlstelle ist dadurch gekennzeichnet, daß sie von zwei Minima begleitet wird, und daß sich in einem genau festgelegten Abstand kein weiteres Maximum befindet. Zur Unterscheidung von Stößen und Fehlstellen muß daher die Umgebung jedes Maximums überprüft werden.

Figur 8A zeigt das Bild einer Maske, in der eine Fehlstelle und ein Stoß auftritt. Wird die Tabelle von Figur 8A entsprechend den Summentabellen in eine Kurve umgesetzt, ergibt sich die Darstellung von Figur 8B. Um definierte Kontraktsbereiche zu erhalten, die darauf untersucht werden können, ob es sich um einen Stoß oder eine Fehlstelle handelt, wird ein weiterer Schwellenwert angesetzt, der entweder gleich dem zweiten Schwellenwert oder kleiner gewählt wird. Je niedriger der Schwellenwert im Rahmen der Unterscheidung von Fehlstelle und Stoß gesetzt wird, desto breiter sind die Kontrastbereiche, die dann untersucht werden können.

Figur 8C zeigt eine Impulsfolge, die sich aus der Umsetzung der Kurve von Figur 8B in Impulse ergibt. Gemäß Figur 8C wird ein Fenster über die Impulsfolge bewegt, dessen Länge L den Bereich zur Untersuchung der Umgebung eines Kontrastbereiches definiert. Bei der Länge L handelt es sich um einen Erfahrungswert, der in das System eingegeben wird. Wenn in dem Fenster zwei Maxima auftreten, wird entschieden, daß die den betreffenden Maxima zugrundeliegenden Kontrastbereiche von einem Stoß verursacht worden sind, mit anderen Worten wird an dieser Stelle ein Stoß festgestellt. Wenn in dem Fenster nur ein Maximum vorhanden ist, wie es ebenfalls in Figur 8C dargestellt ist, wird eine Fehlstelle festgestellt.

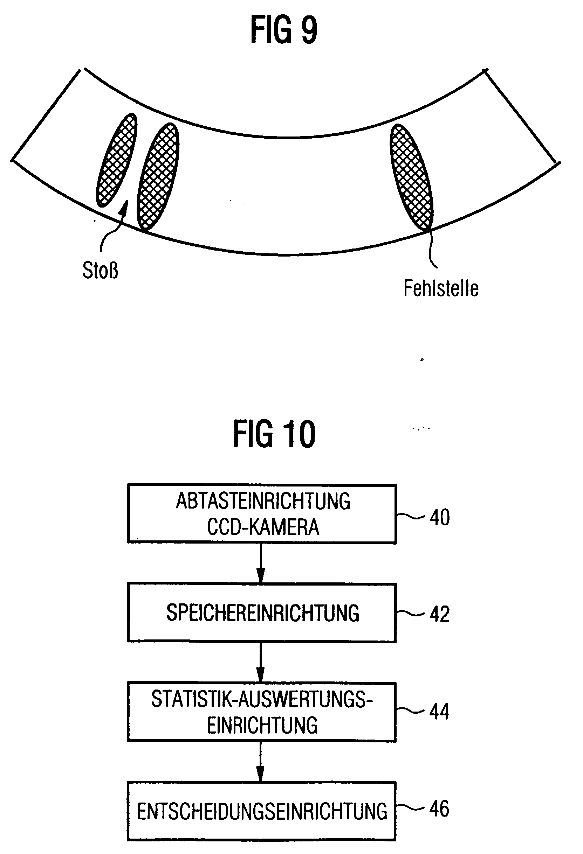

Das Endergebnis wird dann entweder als graphische Information, wie in Figur 9 dargestellt ist, oder als numerische Information an den Benutzer ausgegeben und auch abgespeichert.

In Figur 10 ist ein Blockdiagramm einer Reifenprüfvorrichtung gezeigt, mit der das oben beschriebene Verfahren durchführbar ist. Eine Abtasteinrichtung 40 tastet die das Kontrastprofil nach Winkel und Radius auf Kontrastwerte ab, und in einer Speichereinrichtung 42 werden die Kontrastwerte nach Winkel und Radius abgespeichert. Eine Statistik-Auswertungseinrichtung 44 wertet die Kontrastwerte statistisch aus und bestimmt die Formen und deren gegenseitige Lagen der Kontrastbereiche zueinander, deren Kontrastwerte über einem vorgegebenen Stellenwert liegen. In eine Entscheidungseinrichtung 46 wird aufgrund der Formen und der gegenseitigen Lagen der Kontrastbereiche eine Zuordnung der Kontrastbereiche zu Fehlstellen oder Stößen durchgeführt.

## Patentansprüche

1. Reifenprüfverfahren, bei dem vor und nach einer Änderung im Reifendruck mit kohärenter Strahlung jeweils ein Interferogramm der Reifenoberfläche erzeugt und aus dem Interferogramm die Informationen über vorhandene Fehlstellen des Reifens gewonnen und als Kontrastprofil bereitgestellt werden, **dadurch gekennzeichnet, daß**
- das Kontrastprofil nach Winkel und Radius auf Kontrastwerte abgetastet wird, daß
- die Kontrastwerte und der Winkel und Radius abgespeichert werden, daß
- die Kontrastwerte statistisch ausgewertet und die Formen und die gegenseitigen Lagen von Kontrastbereichen zueinander bestimmt werden, deren Kontrastwerte bei einem vorgegebenen Stellenwert liegen, daß
- aufgrund der Formen und der gegenseitigen Lagen der Kontrastbereiche eine Zuordnung der Kontrastbereiche zu Fehlstellen oder Stößen durchgeführt wird.

2. Verfahren nach Anspruch 1, dadurch gekennzeichnet, daß nur die Kontrastwerte, die oberhalb eines zweiten Schwellenwertes liegen, in einer Schwellenwertdatei abgespeichert werden.

3. Verfahren nach Anspruch 1, dadurch gekennzeichnet, daß die statistische Auswertung über die Häufigkeitsverteilung der Kontrastwerte über dem Radius durchgeführt wird.

4. Verfahren nach Anspruch 1, dadurch gekennzeichnet, daß die statistische Auswertung durchgeführt wird über eine Häufigkeitstabelle der Kontrastwerte, bei der jeder Eintrag in der Schwellenwertdatei den Zähler in der entsprechenden Zelle nach Winkel und Radius erhöht, und eine Häufigkeitssummentabelle der Kontrastwerte, in der die Summen der Spalten der Häufigkeitstabelle über dem Winkel gebildet werden.

5. Verfahren nach Anspruch 1, dadurch gekennzeichnet, daß die statistische Auswertung über die Kontrastwerteverteilung der Kontrastwerte über dem Radius durchgeführt wird.

6. Verfahren nach Anspruch 1, dadurch gekennzeichnet, daß die statistische Auswertung durchgeführt wird über eine Kontrastwertetabelle, in der jeder Kontrastwert aus der Schwellenwertdatei in die entsprechende Zelle nach Winkel und Radius addiert wird, und eine Kontrastwert-Summentabelle, in der die Summen der Spalten der Kontrastwerttabelle aus der Schwellenwertdatei über dem Winkel gebildet werden.

7. Verfahren nach Anspruch 1, dadurch gekennzeichnet, daß eine gewichtete Multiplikation der Häufigkeits-Summentabelle und der Kontrastwerte-Summentabelle durchgeführt wird.

8. Verfahren nach Anspruch 1, dadurch gekennzeichnet, daß die Zuordnung der Kontrastbereiche zu Fehlstellen oder Stößen durch Auswertung der Häufigkeitssummen der Kontrastwerte oder der Kontrastwertesummen durchgeführt wird.

9. Verfahren nach Anspruch 1, dadurch gekennzeichnet, daß nur solche Häufigkeitssummen oder Kontrastwertesummen ausgewertet werden, die einen dritten Schwellenwert übersteigen.

10. Verfahren nach Anspruch 1, dadurch gekennzeichnet, daß der dritte Schwellenwert kleiner als der erste Schwellenwert ist.

11. Verfahren nach Anspruch 1, dadurch gekennzeichnet, daß die Zuordnung eines Kontrastbereiches zu einer Fehlstelle bzw. einem Stoß dadurch durchgeführt wird, daß ein Fenster vorgegebener Länge über eine durch die Summen gebildete Kurve bewegt und eine Fehlstelle festgestellt wird, wenn jeweils nur ein Maximum in dem Fenster erfaßt wird, und ein Stoß festgestellt wird, wenn zwei Maxima der Kurve in dem Fenster erfaßt werden.

12. Reifenprüfvorrichtung mit einer Luftdruckeinrichtung zur Änderung des Reifendrucks sowie einem Prüfkopf und einem Rechner, die vor und nach einer Änderung im Luftdruck mit kohärenter Strahlung jeweils ein Interferogramm der Reifenoberfläche erzeugen, wobei aus dem Interferogramm die Informationen über vorhandene Fehlstellen des Reifens gewonnen und als Kontrastprofil bereitgestellt werden, gekennzeichnet ist durch:
- eine Abtasteinrichtung, die das Kontrastprofil nach Winkel und Radius auf Kontrastwerte abtastet, durch
- eine Speichereinrichtung, in die die Kontrastwerte nach Winkel und Radius abgespeichert werden, durch
- eine Statistik-Auswertungseinrichtung, durch die die Kontrastwerte statistisch ausgewertet und die Formen und deren gegenseitige Lagen der Kontrastbereiche zueinander bestimmt werden, deren Kontrastwerte über einem vorgegebenen Stellenwert liegen, und durch
- eine Entscheidungseinrichtung, durch die aufgrund der Formen und der gegenseitigen Lagen der Kontrastbereiche eine Zuordnung der Kontrastbereiche zu Fehlstellen oder Stößen durchgeführt wird.
